# EUROPEAN PATENT APPLICATION

(11) **EP 3 051 918 A1**
(43) Date of publication of application: **03.08.2016**
(21) Application number: 15305134.7
(22) Date of filing: 30.01.2015
(51) Int. Cl.: H04W 76/04, H04W 52/02

(54) **NETWORK NODE AND METHOD**

(71) Applicant: ALCATEL LUCENT, 92100 Boulogne-Billancourt (FR)
(72) Inventor: WORRALL, Chandrika, Swindon, Wiltshire SN5 7DJ (GB); PALAT, Sudeep, Swindon, Wiltshire SN5 7DJ (GB)
(74) Representative: Coghlan, Judith Elizabeth Kensy

(57) **Abstract**

Aspects and embodiments relate to: a method of user equipment discontinuous reception wake up in a wireless communication network comprising at least one cell configured to perform unscheduled cell status change between an on and an off state; user equipment and a computer program product configured to perform that method; a base station method to support user equipment discontinuous reception wake up in a wireless communication network comprising at least one cell configured to perform unscheduled cell status change between an on and an off state, and a base station and a computer program product configured to perform that method. A first aspect provides a method of user equipment discontinuous reception wake up in a wireless communication network comprising at least one cell configured to perform unscheduled cell status change between an on and an off state; the wake up method comprising: prior to entering a discontinuous sleep mode, determining a communication configuration according to which communication between one or more cells in the network and the user equipment is occurring; entering discontinuous sleep mode; assessing, on scheduled exit from the discontinuous sleep mode, based on measurement at the user equipment, an indication of status of the one or more cells in the network with which the user equipment was communicating according to the determined communication configuration; and communicating with the network in accordance with the assessed indication of status of the one or more cells and the determined communication configuration. Aspects and embodiments may provide a method to be used with fast cell on/ off techniques, such fast cell on/ off techniques having been identified as an important mechanism for interference mitigation in small cell enhancement and LAA.

## Description

### FIELD

Aspects and embodiments relate to: a method of user equipment discontinuous reception wake up in a wireless communication network comprising at least one cell configured to perform unscheduled cell status change between an on and an off state; user equipment and a computer program product configured to perform that method; a base station method to support user equipment discontinuous reception wake up in a wireless communication network comprising at least one cell configured to perform unscheduled cell status change between an on and an off state, and a base station and a computer program product configured to perform that method.

### BACKGROUND

As wireless communication traffic increases, there is a need to increase ability of systems to handle that traffic if a positive user experience is to be maintained. Ways to increase that ability include: increasing bandwidth provided for handling communication signals. Cellular communications are generally transmitted within a licensed bandwidth, the network operators paying large sums of money for their portion of this bandwidth. Higher frequencies are not subject to licenses but at these higher frequencies path losses increase and transmission distances decrease correspondingly, making those unlicensed portions of bandwidth unattractive for cellular communication.

One unlicensed bandwidth that has a frequency that is not much higher than the licensed bands is used by Wi-Fi systems. Use of this additional bandwidth by a cellular base station providing radio coverage within a cell of the cellular network could increase the capacity of that base station but problems of collision between the signals from the cellular base station and the Wi-Fi access points might arise.

In this regard, cellular networks transmit signals using scheduling and OFDMA, (orthogonal frequency division multiple access) so that signals to multiple users can be transmitted and collision between these signals avoided or at least reduced. Wi-Fi systems use CSMA (carrier sense multiple access) to reduce collisions, so that prior to transmitting data they sense to determine if the frequency band is currently being used or not. That is to say, cellular systems are typically scheduled and controlled, whilst communication in a Wi-Fi system is contention-based.

As a result of Wi-Fi "listen before transmit" procedures, if not transmitting using the shared frequency, a cellular base station must not use that frequency to avoid causing any interference to other users in that frequency. In other words, the cellular base station may operate to be "on" or "off" in that shared frequency band.

Furthermore, operation of a network is maybe such that energy is conserves and interference minimised by use of discontinuous reception and transmission techniques, according to which one or more nodes of a network enter a sleep mode in which no communication with a network may take place.

It would be desirable to provide a cellular network in which use of a shared frequency band and in which energy saving techniques can be utilised.

### SUMMARY

A first aspect provides a method of user equipment discontinuous reception wake up in a wireless communication network comprising at least one cell configured to perform unscheduled cell status change between an on and an off state; the wake up method comprising: prior to entering a discontinuous sleep mode, determining a communication configuration according to which communication between one or more cells in the network and the user equipment is occurring; entering discontinuous sleep mode; assessing, on scheduled exit from the discontinuous sleep mode, based on measurement at the user equipment, an indication of status of the one or more cells in the network with which the user equipment was communicating according to the determined communication configuration; and communicating with the network in accordance with the assessed indication of status of the one or more cells and the determined communication configuration.

Network techniques which allow for a fast mechanism to turn a small cell on or off can provide a method to mitigate cell interference. Small cell on/ off techniques may have applicability within a communication network in which wireless spectrum typically used to support non-cellular communication, for example, Wi-Fi spectrum, is re-used or shared by a cellular communication network. Such spectrum sharing cellular communication networks maybe referred to as License Assisted Access (LAA) networks. Such use, by a cellular network, of non-cellular network spectrum, may be subject to standards and protocols demanded by the non-cellular access network spectrum. In particular, compared to a pure cellular network which is neatly scheduled, the operation of a contention based mechanism for obtaining shared resource in an LAA network may make the "on" and "off" states of a small cell dynamically variable.

In relation to, for example, an LAA network in which Wi-Fi spectrum is shared with a cellular network, it may be necessary for any node operating within the Wi-Fi spectrum to implement a "Listen before Talk" (LBT) protocol. As a result, an LAA cell (one which can operate to support cellular communication on traditionally "non-cellular" frequency spectrum) may have an on/ off status which may change dynamically depending on the channel sensing mechanism which is being used. As alluded to previously in relation to Wi-Fi LBT techniques, a base station may be configured to use channel sensing to identify the amount of interference from neighbouring cells and hence determine an indication of neighbouring cell activity before transmitting data itself in the current cell.

The first aspect recognises that fast cell on/off techniques may have particular operational consequences in relation to energy saving techniques being utilised within a network. In particular, a network may support communication with user equipment or other network connectable devices (UEs) which are in long discontinuous reception (DRX) cycles when a cell status change to "off" is performed. User equipment in long DRX sleep phases are configured such that they do not listen to any downlink channels in order to prolong available battery power by limiting user equipment energy consumption.

It will be appreciated that if active signalling is used to inform UEs of a change to cell status, the network must either wake any User Equipment in a long DRX in order that such user equipment can receive the necessary signalling, or wait until such user equipment are awake and monitoring an appropriate channel to receive the necessary signalling indicative of a change to cell status. Both such approaches have drawbacks in relation to signalling efficiency and, it can be seen that such approaches may not satisfy a requirement for a "fast" cell status change.

Aspects and embodiments may offer alternative approaches. Such alternative approaches may allow those user equipment in a long DRX to remain in long DRX without any interruption when a cell status is changed to "off". Accordingly, user equipment which were in DRX during the switch to cell off are unaffected by a cell on/off/on status change which occurs while that user equipment is operating in sleep mode.

From a user equipment perspective, some aspects and embodiments described may provide approaches to be implemented by UE if that UE has come out of sleep mode and then finds itself in a cell which has had its status switched to "off". According to some approaches, when a UE which was in DRX sleep mode then wakes up (is in DRX ON) and finds that a cell (which may have been OFF while the UE was asleep) is ON, then communication according to the previous UE and cell configuration may resume.

In summary, the first aspect provides a method implemented by user equipment on scheduled waking from a discontinuous reception period of sleep. The first aspect may be of use in a communication network in which at least one cell is configured to perform unscheduled fast cell status changes between an on and an off state. One or more fast cell status changes may have been made by a cell in the network while user equipment is asleep. The wake up method may comprise a step taken prior to entering the discontinuous sleep mode, namely that of determining a communication configuration according to which communication between one or more cells in the network and the user equipment is occurring. That determining may simply be achieved by operating within the network and retaining that communication configuration information while asleep. The user equipment may then enter discontinuous sleep mode. When scheduled, the user equipment may awaken from discontinuous sleep. On waking, the user equipment may assess based on autonomous measurements taken by the user equipment, rather than explicit signalling directed to the user equipment from the network, an indication of status of the one or more cells in the network with which the user equipment was communicating according to the determined communication configuration before it entered sleep mode. Based on that assessment and the configuration information already held by the user equipment, the user equipment may then commence communication with the network, even if there have been changes to the ambient network while the user equipment was asleep.

The user equipment may be configured to take one or more actions, depending on the assessment made based on the user equipment measurements and the information held in the configuration on entry to sleep mode.

For example, according to one embodiment, assessment comprises: determining that all of the one or more cells are in an off state and communicating with the network comprises: initiating an RRC Connection Reestablishment process with the wireless communication network.

According to one embodiment, assessment comprises: determining that a primary cell of the one or more cells is in an off state and communicating with the network comprises: initiating an RRC Connection Reestablishment process with the wireless communication network.

According to one embodiment, assessment comprises: determining that a primary cell of the one or more cells is in an on state and a secondary cell of the one or more cells is in an off state and communicating with the network comprises: resuming communication with the primary cell in accordance with the determined communication configuration.

According to one embodiment, communicating with the network comprises: adjusting the communication configuration such that the user equipment considers the secondary cell to be deactivated.

According to one embodiment, communicating with the network comprises: adjusting the communication configuration such that the user equipment considers the secondary cell to be released.

According to one embodiment, assessment comprises: determining that all of the one or more cells are in an on state and communicating with the network comprises: resuming communication with the network in accordance with the determined communication configuration.

According to one embodiment, measurement at the user equipment comprises one or more of: monitoring for cell specific signalling, below threshold cell reference signal received power, below threshold radio resource management, or absence of essential cell system information blocks.

A second aspect provides a computer program product operable, when executed on a computer, to perform the method of the first aspect.

A third aspect provides user equipment configured to wake up from discontinuous reception in a wireless communication network comprising at least one cell configured to perform unscheduled cell status change between an on and an off state; the user equipment comprising: communication configuration logic configured to determine, prior to entering a discontinuous sleep mode, a communication configuration according to which communication between one or more cells in the network and the user equipment is occurring; sleep mode logic operable to enter the user equipment into discontinuous sleep mode; assessment logic operable to assess, on scheduled exit from the discontinuous sleep mode, based on measurement at the user equipment, an indication of status of the one or more cells in the network with which the user equipment was communicating according to the determined communication configuration; and communication logic operable to communicate with the network in accordance with the assessed indication of status of the one or more cells and the determined communication configuration.

According to one embodiment, the assessment logic is operable to determine that all of the one or more cells are in an off state and the communication logic is operable to communicate with the network by: initiating an RRC Connection Reestablishment process with the wireless communication network.

According to one embodiment, the assessment logic is operable to determine that a primary cell of the one or more cells is in an off state and the communication logic is operable to communicate with the network by: initiating an RRC Connection Reestablishment process with the wireless communication network.

According to one embodiment, the assessment logic is operable to determine that a primary cell of the one or more cells is in an on state and a secondary cell of the one or more cells is in an off state and the communication logic is operable to communicate with the network by: resuming communication with the primary cell in accordance with the determined communication configuration.

According to one embodiment, the communication logic is operable to communicate with the network by: adjusting the communication configuration such that the user equipment considers the secondary cell to be deactivated.

According to one embodiment, the communication logic is operable to communicate with the network by: adjusting the communication configuration such that the user equipment considers the secondary cell to be released.

According to one embodiment, the assessment logic is operable to determine that all of the one or more cells are in an on state and the communication logic is operable to communicate with the network by: resuming communication with the network in accordance with the determined communication configuration.

According to one embodiment, measurement at the user equipment comprises one or more of: monitoring for cell specific signalling, below threshold cell reference signal received power, below threshold radio resource management, or absence of essential cell system information blocks.

From a network perspective, arrangements according to the first to third aspects may be supported and facilitated by corresponding changes to operation at the base stations. Such changes may include, for example, that a network maintains and retains UE configuration information in relation to user equipment which are in DRX while the cell is off. That may be achieved, for example, by changing base station (for example, eNB) behaviour. Rather than flushing all UE context information when switched to off, that context information may be retained.

A fourth aspect provides a base station method to support user equipment discontinuous reception wake up in a wireless communication network comprising at least one cell configured to perform unscheduled cell status change between an on and an off state; the base station method comprising: when in an on state, determining a communication configuration according to which communication between one or more cells supported by the base station in the network and the user equipment operating in a discontinuous reception mode is occurring; performing an unscheduled cell status change to an off state and retaining the determined communication configuration; performing a cell status change to an on state and using the retained communication configuration to support communication with the user equipment performing discontinuous reception wake up in the wireless communication network.

Accordingly, arrangements may provide an LAA compatible network in which fast cell on/ off is enabled. Arrangements may operate such that a base station implementing fast on/off techniques in relation to a cell takes into account user equipment which are in DRX. In particular, a base station may operate to take into account those user equipment which have long DRX status. Such user equipment operating in long DRX may be beneficial to overall energy efficiency in a network since they do not consume resources whilst asleep and hence cannot cause interference. Disruption of the DRX operation of such user equipment may therefore be particularly detrimental to the overall operation of a communication network.

In order to mitigate disruption to the operation of long DRX user equipment, when a cell supported by a base station is switched to "off", for example, due to fast cell on/off methods used to support LAA network operation, the network (eNB) is configured to maintain UE context (as when the UE was in connected to the eNB).

The fourth aspect may be helpful when addressing complications associated with unscheduled, dynamic, fast cell status changes according to which a delay, in order to inform all user equipment of the intended change to network configuration, may be detrimental to overall network operation.

In one embodiment, the communication configuration comprises radio configuration associated with the user equipment operating in a discontinuous reception mode. In one embodiment, low protocol layers are flushed for all user equipment when the unscheduled cell status change to an off state is performed. In some arrangements, in order to simplify required supporting base station processing, lower protocol layers of configuration information can be flushed for all UEs when the cell is switched to off due to a fast cell on/off procedure. The UEs are not informed of any change to cell status and this no extra signalling due to a fast cell on/off procedure occurs over the radio interface.

A fifth aspect provides a computer program product operable, when executed on a computer, to perform the method of the fourth aspect.

A sixth aspect provides a base station configured to support user equipment discontinuous reception wake up in a wireless communication network comprising at least one cell configured to perform unscheduled cell status change between an on and an off state; the base station comprising: configuration logic operable, when the base station is in an on state, to determine a communication configuration according to which communication between one or more cells supported by the base station in the network and the user equipment operating in a discontinuous reception mode is occurring; status change logic operable to perform an unscheduled cell status change to an off state and retain the determined communication configuration and perform a subsequent cell status change to an on state; and communication logic configured to use the retained communication configuration to support communication with the user equipment performing discontinuous reception wake up in the wireless communication network.

In one embodiment, the communication configuration comprises radio configuration associated with the user equipment operating in a discontinuous reception mode.

In one embodiment, low protocol layers are flushed for all user equipment when the unscheduled cell status change to an off state is performed.

Further particular and preferred aspects are set out in the accompanying independent and dependent claims. Features of the dependent claims may be combined with features of the independent claims as appropriate, and in combinations other than those explicitly set out in the claims. Features described in relation to one aspect can be combined with other aspects as appropriate.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present subject matter will now be described further, with reference to the accompanying drawings, in which:

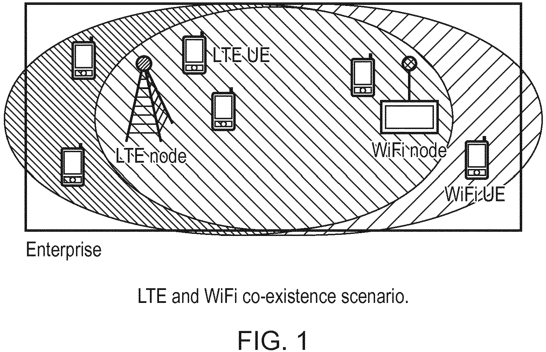

Figure 1 illustrates an example LAA network deployment.

### DESCRIPTION OF THE EMBODIMENTS

Figure 1 illustrates schematically a network deployment comprising 1 LTE and 1 Wi-Fi access node in an enterprise environment. In the LAA network shown schematically, the Wi-Fi spectrum is in use by both the LTE and Wi-FI network. The two access nodes reuse the same frequency band and are located in different geographical positions within the enterprise, but have a region of overlapping coverage. In the arrangement shown in Figure 1, the LTE node is serving 4 UEs and the Wi-Fi node is serving 2 UEs. Each UE has associated DL and UL traffic. One or more of those UE in the LTE region of coverage may be operating according to a DRX mode. Alternative network deployments may be such that an LTE network reuses Wi-Fi spectrum for communication, even if no Wi-Fi access nodes are present in a region of a network. If using regulated spectrum, for example Wi-Fi spectrum, LTE nodes must operate in accordance with governing regulations relating to such a region of available spectrum.

Before discussing the embodiments in any more detail, first an overview will be provided.

Arrangements may provide an LAA compatible network in which fast cell on/ off is enabled. Arrangements may operate such that a base station implementing fast on/off techniques in relation to a cell takes into account user equipment which are in DRX. In particular, a base station may operate to take into account those user equipment which have long DRX status. Such user equipment operating in long DRX may be beneficial to overall energy efficiency in a network since they do not consume resources whilst asleep and hence cannot cause interference. Disruption of the DRX operation of such user equipment may therefore be particularly detrimental to the overall operation of a communication network.

In order to mitigate disruption to the operation of long DRX user equipment, when a cell supported by a base station is switched to "off", for example, due to fast cell on/off methods used to support LAA network operation, the network (eNB) is configured to maintain UE context (as when the UE was in connected to the eNB).

The behaviour of a DRX user equipment which awakes from long DRX sleep may depend upon whether that UE comes out of sleep mode whilst a cell is "off" or "on":
If the UE comes out of DRX when the cell is ON, communication between the UE and the eNB may resume, using the radio configuration which was maintained at the eNB prior to the cell status being switched to off.
If the UE comes out of DRX sleep mode while the cell is OFF, a UE may be operable to follow defined behaviour in dependence upon assessed network characteristics. For example, the behaviour of a waking UE may depend upon the "type" of cell which the UE determines to have an "OFF" status.

In particular, some arrangements may recognise that a network may support communication with user equipment using carrier aggregation (CA) techniques. CA techniques are such that a UE may be operable to communicate with more than one cell. Typically, if operating according to CA techniques, a UE may be in communication with a Primary Cell (PCell) and one or more Seconday Cells (SCell).

If a DRX UE which was operating ina CA mode awakes from DRX, arrangements may allow its behaviour to depend upon whether it determines a PCell or an SCell to have OFF status.

In some arrangements, if a UE determines that a PCell is OFF, the UE may be configured to perform a RRC Connection Reestablishment procedure. The UE may be configured to inform the network of its reason for reestablishment, together with its DRX configuration.

In some arrangements, if a UE determines that an SCell is OFF, the UE may be configured to do nothing. Alternatively, according to some arrangements, if an SCell is determined to be OFF, the UE maybe configured to operate as if it considers the off SCell to be deactivated or released. In other words, the UE may no longer operate within a network in a CA mode.

### NETWORK SIDE OPERATION

Arrangements may provide a mechanism for fast cell on/off in which before a cell is turned off, the decision as to whether it is appropriate to turn the cell off takes into account the number of user equipment within that cell which are operating in long DRX mode which may become active while the cell is switched off and those which may not become active until the cell is switched on again.

In particular, from a network point of view, when a cell is off, any UE supported by that cell may need to be handed over to another cell, particularly in cases where those user equipment are not operating in CA mode or if it is the PCell which is switched off.

If user equipment is in long DRX, a network may need to delay any switch to off until the UE comes out of sleep (DRX on) in order to send an appropriate handover command to the UE. Such operation may mean that turning off a cell is delayed, which may not be desirable.

According to some arrangements, a cell may operate to maintain UE context while that cell is off due to fast cell on/off. Accordingly, all radio configuration for user equipment is maintained. In some arrangements, in order to simplify required eNB processing, lower protocol layers of configuration information can be flushed for all UEs when the cell is switched to off due to a fast cell on/ off procedure. The UEs are not informed of any change to cell status. Thus no extra signalling due to a fast cell on/off procedure occurs over the radio interface.

### USER EQUIPMENT DRX WAKE UP OPERATION

Operation of user equipment on waking from a DRX sleep cycle may depend upon determined ambient network conditions, compared to ambient network conditions when that user equipment entered DRX sleep mode.

According to some arrangements, if the UE comes out of sleep mode and cells with which it was in communication before going to sleep are determined to be ON, then communication between the UE and one or more eNBs may resume. In relation to downlink (DL) communication, the one or more eNBs which have been OFF, but which have returned to ON may start communication with the UE with a new transmission since the lower protocol layers have typically been flushed, whilst configuration information has been retained through the OFF period.

Since the UE was in DRX sleep mode at the time that the one or more cell was OFF, any UE HARQ processes were considered complete at the time of cell OFF. As a result, the DL/UL transmission starts with a new transmission. If the fast cell on/off and UE DRX configurations are aligned, the UE may not experience any interruptions due to the fast cell on/ off.

According to some arrangements, a UE may come out of DRX sleep mode and a cell with which it was previously in communication may be OFF. That UE may be configured to monitor and identify the absence of the cell due to cell OFF. The cell OFF may be identified by the UE based on various criteria, for example, absence of cell specific signalling, low RSRP, RRM, or absence of essential SIBs. Upon identification by the UE of one or more cell OFF, the UE may be configured to take appropriate action.

If the UE determines that the cell which is OFF is a PCell, then the UE may be configured to perform a RRC Connection Reestablishment procedure. During that procedure, the UE may indicate a UE DRX configuration and a cause of reestablishment to the network (connecting eNB).

If the UE determines that the cell which is OFF is an SCell, then, according to some embodiments, the UE may be configured to consider the SCell to be deactivated or released. When transmitting MAC control elements such as PHR, or channel quality indication, CQI, the UE may operate as if it considers the OFF SCell to be a deactivated SCell. Thus, the network may, when the SCell is turned ON, perform activation or configuration of that SCell in relation to that UE.

If the UE determines that the cell which is OFF is an SCell, then, according to some embodiments, the UE may be configured not to perform any special treatment in relation to the OFF SCell. In other words, the UE may treat the OFF SCell as activated SCell. In such an arrangement, the network is aware that the SCell os OFF and hence when allocating radio resources for UL and DL, the network takes into account that the corresponding SCell is OFF and avoids allocating any resources in relation to the OFF SCell. In this case, the eNB is not required to reactivate or reconfigure the SCell when it is turned back ON, but can then begin allocating resource appropriately.

Some arrangements recognise that UE may be configured to have separate, distinct DRX configurations for different groups of cells. For example, a UE may have one DRX configuration for communication with a PCell and another DRX configuration in relation to communication with an SCell. Such a "cell group" concept is used in dual connectivity where a master eNB may belong to a master cell group and a secondary eNB belong to a secondary cell group. Different DRX configurations are independently configured for master and secondary cell groups. The fast cell on/off concepts described above can also be applied when such independent DRX configurations and Cell group concepts are implemented in relation to a UE operating within a network.

Aspects and embodiments may provide a method to be used with fast cell on/ off techniques, such fast cell on/ off techniques having been identified as an important mechanism for interference mitigation in small cell enhancement and LAA.

Aspects and embodiments allow for alternative base station and UE operation in a fast cell on/ off arrangement which does nore require signalling of cell ON/ OFF status to DRX UE, and hence may avoid excessive signaling over the radio interface. Furthermore, techniques described may improve UE battery consumption sincethose UE operating in long DRX are not awaked in order to signal any fast change to a cell status.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

## Claims

1. A method of user equipment discontinuous reception wake up in a wireless communication network comprising at least one cell configured to perform unscheduled cell status change between an on and an off state; said wake up method comprising:
prior to entering a discontinuous sleep mode, determining a communication configuration according to which communication between one or more cells in said network and said user equipment is occurring;
entering discontinuous sleep mode;
assessing, on scheduled exit from said discontinuous sleep mode, based on measurement at the user equipment, an indication of status of said one or more cells in said network with which said user equipment was communicating according to said determined communication configuration; and
communicating with said network in accordance with said assessed indication of status of said one or more cells and said determined communication configuration.

2. A method according to claim 1, wherein said assessment comprises:
determining that all of said one or more cells are in an off state and communicating with said network comprises: initiating an RRC Connection Reestablishment process with said wireless communication network.

3. A method according to any one of claims 1 or 2, wherein said assessment comprises: determining that a primary cell of said one or more cells is in an off state and communicating with said network comprises: initiating an RRC Connection Reestablishment process with said wireless communication network.

4. A method according to any preceding claim, wherein said assessment comprises: determining that a primary cell of said one or more cells is in an on state and a secondary cell of said one or more cells is in an off state and communicating with said network comprises: resuming communication with said primary cell in accordance with said determined communication configuration.

5. A method according to claim 4, wherein communicating with said network comprises: adjusting said communication configuration such that said user equipment considers said secondary cell to be deactivated.

6. A method according to claim 4, wherein communicating with said network comprises: adjusting said communication configuration such that said user equipment considers said secondary cell to be released.

7. A method according to any preceding claim, wherein said assessment comprises: determining that all of said one or more cells are in an on state and communicating with said network comprises: resuming communication with said network in accordance with said determined communication configuration.

8. A method according to any preceding claim, wherein said measurement at said user equipment comprises one or more of: monitoring for cell specific signalling, below threshold cell reference signal received power, below threshold radio resource management, or absence of essential cell system information blocks.

9. User equipment configured to wake up from discontinuous reception in a wireless communication network comprising at least one cell configured to perform unscheduled cell status change between an on and an off state; said user equipment comprising:
communication configuration logic configured to determine, prior to entering a discontinuous sleep mode, a communication configuration according to which communication between one or more cells in said network and said user equipment is occurring;
sleep mode logic operable to enter said user equipment into discontinuous sleep mode;
assessment logic operable to assess, on scheduled exit from said discontinuous sleep mode, based on measurement at the user equipment, an indication of status of said one or more cells in said network with which said user equipment was communicating according to said determined communication configuration; and
communication logic operable to communicate with said network in accordance with said assessed indication of status of said one or more cells and said determined communication configuration.

10. Abase station method to support user equipment discontinuous reception wake up in a wireless communication network comprising at least one cell configured to perform unscheduled cell status change between an on and an off state; said base station method comprising:
when in an on state, determining a communication configuration according to which communication between one or more cells supported by said base station in said network and said user equipment operating in a discontinuous reception mode is occurring;
performing an unscheduled cell status change to an off state and retaining said determined communication configuration;
performing a cell status change to an on state and using said retained communication configuration to support communication with said user equipment performing discontinuous reception wake up in said wireless communication network.

11. A method according to claim 10, wherein said communication configuration comprises radio configuration associated with said user equipment operating in a discontinuous reception mode.

12. A method according to claim 10 or claim 11, wherein low protocol layers are flushed for all user equipment when said unscheduled cell status change to an off state is performed.

13. Abase station configured to support user equipment discontinuous reception wake up in a wireless communication network comprising at least one cell configured to perform unscheduled cell status change between an on and an off state; said base station comprising:
when in an on state, configuration logic operable to determine a communication configuration according to which communication between one or more cells supported by said base station in said network and said user equipment operating in a discontinuous reception mode is occurring;
status change logic operable to perform an unscheduled cell status change to an off state and retain said determined communication configuration and perform a subsequent cell status change to an on state; and
communication logic configured to use said retained communication configuration to support communication with said user equipment performing discontinuous reception wake up in said wireless communication network.

14. A computer program product, operable when executed on a computer, to perform the method of any one of claims 1 to 8 or claims 10 to 12.
